# FASCICULE DE BREVET EUROPEEN

(11) **EP 1 773 938 B1**
(45) Date de publication et mention de la délivrance du brevet: **20.04.2011**
(21) Numéro de dépôt: 05772236.5
(22) Date de dépôt: 28.07.2005
(51) Int. Cl.: C08L 21/00, C08K 5/548, B60C 1/00

(54) **COMPOSITION DE CAOUTCHOUC DEPOURVUE OU PRATIQUEMENT DEPOURVUE DE ZINC**
ZINKFREIE ODER PRAKTISCH ZINKFREIE KAUTSCHUKZUSAMMENSETZUNG
ZINC-FREE OR PRACTICALLY ZINC-FREE RUBBER COMPOSITION

(30) Priorité: 29.07.2004 FR 0408425; 03.12.2004 FR 0412837
(43) Date de publication de la demande: 18.04.2007
(73) Titulaire: Société de Technologie Michelin, 63000 Clermont-Ferrand (FR); Michelin Recherche et Technique S.A., 1763 Granges-Paccot (CH)
(72) Inventeur: CAMBON, Stéphanie, F-63400 Chamalières (FR); VASSEUR, Didier, F-63100 Clermont-Ferrand (FR)
(74) Mandataire: Ribière, Joel
(86) Numéro de dépôt international: PCT/EP2005/008181
(87) Numéro de publication internationale: WO 2006/013056

(56) Documents cités:
- WO-A-03/002649
- FR-A- 2 823 215

## Description

La présente invention est relative aux compositions de caoutchoucs diéniques renforcées d'une charge inorganique telle que silice, utilisables notamment pour la fabrication de pneumatiques ou produits semi-finis pour pneumatiques tels que des bandes de roulement.

La vulcanisation des élastomères diéniques par le soufre est largement utilisée dans l'industrie du caoutchouc, en particulier dans celle du pneumatique. Pour vulcaniser les élastomères diéniques, on utilise un système de vulcanisation relativement complexe comportant, en plus du soufre, divers accélérateurs de vulcanisation ainsi qu'un ou plusieurs activateurs de vulcanisation, tout particulièrement des dérivés du zinc tels que l'oxyde de zinc (ZnO), des sels de zinc d'acides gras tels que le stéarate de zinc.

Un objectif à moyen terme des manufacturiers de pneumatiques est de supprimer le zinc ou ses dérivés de leurs formulations de caoutchouterie, en raison de l'impact environnemental connu de ces composés, notamment vis-à-vis de l'eau et des organismes aquatiques (classement R50 selon directive européenne 67/548/CE du 9 décembre 1996).

Il se trouve toutefois que la suppression de l'oxyde de zinc, spécifiquement dans des compositions de caoutchouc renforcées d'une charge inorganique telle que silice, pénalise très fortement les caractéristiques de mise en oeuvre (ou "processabilité") des compositions de caoutchouc à l'état cru, avec une réduction du temps de grillage qui est rédhibitoire du point de vue industriel. On rappelle que le phénomène dit de "grillage" (*"scorching"*) conduit rapidement, au cours de la préparation des compositions de caoutchouc dans un mélangeur interne, à des vulcanisations prématurées, à des viscosités à l'état cru très élevées, en fin de compte à des compositions de caoutchouc quasiment impossibles à travailler et à mettre en oeuvre industriellement.

Pour répondre au problème de suppression du zinc, il a été certes proposé de remplacer l'oxyde de zinc par un autre oxyde métallique, par exemple MgO, ou encore par un sel ou oxyde d'un métal de transition appartenant aux groupes IIA, IVA, VA, VIA, VIIA ou VIIIA du tableau périodique des éléments, particulièrement cobalt ou nickel (voir documents de brevet US 6,506,827 et WO 2003/054081).

De telles solutions, outre le fait qu'elles ne satisfont pas aux exigences des compositions de caoutchouc renforcées d'une charge inorganique, au moins pour certaines d'entre elles, ne sont pas réellement acceptables à long terme, du point de vue de la protection de l'environnement, dans la mesure où elles proposent de remplacer un métal par un autre métal, tout aussi condamné à terme à être dispersé dans la nature avec les débris d'usure des pneumatiques, particulièrement ceux des bandes de roulement résultant inévitablement des divers frottements dus pour l'essentiel aux efforts de freinage, d'accélération, de prises de virage.

Or, les Demanderesses ont trouvé une solution nouvelle qui permet de supprimer totalement (ou l'utiliser dans un quantité négligeable) le zinc des formulations de caoutchouterie renforcées d'une charge inorganique telle que silice, sans remplacer le zinc par un autre métal et tout en préservant les compositions de caoutchouc du problème de grillage prématuré lors de leur mise en oeuvre industrielle.

En conséquence, un premier objet de l'invention concerne une composition de caoutchouc, utilisable notamment pour la fabrication de pneumatiques, ladite composition étant caractérisée en ce qu'elle est dépourvue ou contient moins de 0,5 pce de zinc et comporte au moins (pce = parties en poids pour cent parties d'élastomère) :
- un élastomère diénique ;
- une charge inorganique à titre de charge renforçante ;
- optionnellement du noir de carbone, à un taux inférieur à 5 pce ;
- un silane-polysulfure de formule (I) : 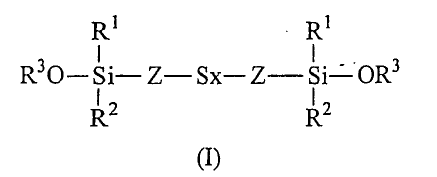
dans laquelle :
- les symboles R¹ et R², identiques ou différents, représentent chacun un groupe hydrocarboné monovalent choisi parmi les alkyles, linéaires ou ramifiés, ayant de 1 à 6 atomes de carbone et le radical phényle ;
- les symboles R³ identiques ou différents, représentent chacun l'hydrogène ou un groupe hydrocarboné monovalent choisi parmi les alkyles, linéaires ou ramifiés, ayant de 1 à 4 atomes de carbone et les alkoxyalkyles, linéaires ou ramifiés, ayant de 2 à 8 atomes de carbone ;
- les symboles Z, identiques ou différents, sont des groupes de liaison divalents comportant de 1 à 18 atomes de carbone ;
- x est un nombre entier ou fractionnaire égal ou supérieur à 2.

C'est l'emploi combiné de l'agent de couplage de formule (I) et d'un taux très faible ou nul de noir de carbone qui permet, de manière inattendue, de pallier totalement l'absence (ou quasi-absence) de zinc dans les compositions de l'invention.

L'invention a également pour objet un procédé pour préparer une composition de caoutchouc à base d'un élastomère diénique et d'une charge inorganique renforçante, dépourvue ou contenant moins de 0,5 pce de zinc et présentant une processabilité à l'état cru améliorée, ce procédé étant caractérisé en ce qu'on incorpore par malaxage, à au moins un élastomère diénique, au moins une charge inorganique à titre de charge renforçante, un silane-polysulfure de formule (I) et de 0 à moins de 5 pce de noir de carbone.

L'invention a également pour objet l'utilisation d'une composition conforme à l'invention pour la fabrication d'articles finis ou produits semi-finis, ainsi que ces articles finis et produits semi-finis eux-mêmes, comportant une composition de caoutchouc conforme à l'invention, ces articles ou produits semi-finis étant destinés à tous "Systèmes de liaison au sol" (ou *"suspension systemis"*) des véhicules automobiles, tels que pneumatiques, appuis internes de sécurité pour pneumatiques, roues, ressorts en caoutchouc, articulations élastomériques, autres éléments de suspension et anti-vibratoire.

L'invention a tout particulièrement pour objet l'utilisation d'une composition de caoutchouc conforme à l'invention pour la fabrication de pneumatiques ou de produits semi-finis en caoutchouc destinés à ces pneumatiques, ces produits semi-finis étant notamment choisis dans le groupe constitué par les bandes de roulement, les sous-couches destinées par exemple à être placées sous ces bandes de roulement, les nappes sommet, les flancs, les nappes carcasse, les talons, les protecteurs, les chambres à air et les gommes intérieures étanches pour pneu sans chambre.

La composition conforme à l'invention est particulièrement adaptée à la fabrication de bandes de roulement de pneumatiques destinés à équiper des véhicules de tourisme, camionnettes, véhicules 4x4 (à 4 roues motrices), deux roues, "Poids-lourds" (c'est-à-dire métro, bus, engins de transport routier (camions, tracteurs, remorques), véhicules hors-la-route), avions, engins de génie civil, agraire, ou de manutention.

L'invention a également pour objet ces Systèmes de liaison au sol des véhicules automobiles, ces pneumatiques et produits semi-finis en caoutchouc eux-mêmes, notamment bandes de roulement, lorsqu'ils comportent une composition de caoutchouc conforme à l'invention. L'invention a notamment pour objet l'utilisation de telles bandes de roulement pour la fabrication de pneumatiques neufs ou le rechapage des pneumatiques usagés.

L'invention concerne également ces Systèmes de liaison au sol des véhicules automobiles, pneumatiques et bandes de roulement tant à l'état cru (i.e., avant cuisson) qu'à l'état cuit (i.e., après réticulation ou vulcanisation).

L'invention ainsi que ses avantages seront aisément compris à la lumière de la description détaillée et des exemples de réalisation qui suivent.

### I. MESURES ET TESTS UTILISES

Les compositions de caoutchouc sont caractérisées, avant et après cuisson, comme indiqué ci-après.

### I-1. Plasticité Mooney

On utilise un consistomètre oscillant tel que décrit dans la norme française NF T 43-005 (Novembre 1980). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

### I-2. Temps de grillade

Les mesures sont effectuées à 130°C, conformément à la norme française NF T 43-005. L'évolution de l'indice consistométrique en fonction du temps permet de déterminer le temps de grillage des compositions de caoutchouc, apprécié conformément à la norme précitée par le paramètre T5 (cas d'une grand rotor), exprimé en minutes, et défini comme étant le temps nécessaire pour obtenir une augmentation de l'indice consistométrique (exprimée en UM) de 5 unités au dessus de la valeur minimale mesurée pour cet indice.

### I-3. Dureté Shore A

La dureté Shore A des compositions après cuisson est appréciée conformément à la norme ASTM D 2240-86.

### I-4. Essais de traction

Ces essais de traction permettent de déterminer les contraintes d'élasticité et les propriétés à la rupture. Sauf indication différente, ils sont effectués conformément à la norme française NF T 46-002 de septembre 1988. On mesure en seconde élongation (i.e., après un cycle d'accommodation au taux d'extension prévu pour la mesure elle-même) les modules sécants nominaux (ou contraintes apparentes, en MPa) à 10% d'allongement (notés M10), 100% d'allongement (notés M100) et 300% d'allongement (notés M300).

Les contraintes à la rupture (en MPa) et les allongements à la rupture (en %) sont également mesurés. Toutes ces mesures de traction sont effectuées dans les conditions normales de température (23 ± 2°C) et d'hygrométrie (50 ± 5% d'humidité relative), selon la norme française NF T 40-101 (décembre 1979).

### I.5 Propriétés dynamiques

Les propriétés dynamiques ΔG* et tan(δ)ₘₐₓ sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99, ou selon les cas à une température différente. On effectue un balayage en amplitude de déformation de 0,1% à 45% (cycle aller), puis de 45% à 0,1 % (cycle retour). Les résultats exploités sont le module complexe de cisaillement dynamique (G*) et le facteur de perte tan(δ). Pour le cycle retour, on indique la valeur maximale de tan(δ) observée, noté tan(δ)ₘₐₓ, ainsi que l'écart de module complexe (ΔG*) entre les valeurs à 0,1% et à 45% de déformation (effet Payne).

### II. DESCRIPTION DETAILLEE DE L'INVENTION

Dans la présente demande, doit être entendu par composition "pratiquement dépourvue" de zinc ou dérivé de zinc, une composition comportant tout au plus une quantité négligeable de zinc ou dérivé de zinc, c'est-à-dire telle que son taux pondéral de zinc soit inférieur à 0,5 pce, de préférence inférieur à 0,3 pce. Plus préférentiellement, la composition de l'invention est dépourvue (i.e., totalement dépourvue) de zinc (ou dérivé de zinc), en d'autres termes son taux de zinc est égal à zéro (0 pce).

Les compositions de l'invention sont donc à base d'au moins : (i) un (au moins un) élastomère diénique, (ii) une (au moins une) charge inorganique titre de charge renforçante, (iii) un (au moins un) silane-polysulfure de formule (I) à titre d'agent de couplage charge inorganique/ élastomère diénique, et de (iv) 0 à moins de 5 pce de noir de carbone.

Par l'expression composition "à base de", on doit entendre dans la présente demande une composition comportant le mélange et/ou le produit de réaction des différents constituants utilisés, certains de ces constituants de base (par exemple l'agent de couplage et la charge inorganique) étant susceptibles de, ou destinés à réagir entre eux, au moins en partie, lors des différentes phases de fabrication des compositions, en particulier au cours de leur vulcanisation (cuisson).

Dans la présente description, sauf indication expresse différente, tous les pourcentages (%) indiqués sont des % en masse.

### II -1. Elastomère diénique

Par élastomère ou caoutchouc (les deux termes étant synonymes), du type "diénique", on entend de manière générale un élastomère issu au moins en partie (i.e. un homopolymère ou un copolymère) de monomères diènes (monomères porteurs de deux doubles liaisons carbone-carbone, conjuguées ou non).

Les élastomères diéniques, de manière connue, peuvent être classés en deux catégories : ceux dits "essentiellement insaturés" et ceux dits "essentiellement saturés". Par élastomère diénique "essentiellement insaturé", on entend un élastomère diénique issu au moins en partie de monomères diènes conjugués, ayant un taux de motifs ou unités d'origine diénique (diènes conjugués) qui est supérieur à 15% (% en moles); c'est ainsi, par exemple, que des élastomères diéniques tels que les caoutchoucs butyle ou les copolymères de diènes et d'alpha-oléfines type EPDM n'entrent pas dans cette définition et peuvent être qualifiés au contraire d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention :
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone; comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di-alkyl(C1-CS)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse ("Tg" - mesurée selon ASTM D3418-82) de -40°C. à -80°C, les copolymères isoprène-styrène et notamment ceux ayant une teneur en styrène comprise entre 5% et 50% en poids et une Tg comprise entre -25°C et -50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

En résumé, de manière particulièrement préférentielle, l'élastomère diénique de la composition conforme à l'invention est choisi dans le groupe des élastomères diéniques (fortement insaturés) constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

La composition conforme à l'invention est notamment destinée, de manière préférentielle, à une bande de roulement de pneumatique pour véhicule tourisme. Dans un tel cas, l'élastomère diénique est de préférence un copolymère SBR, en particulier un SBR préparé en solution, utilisé de préférence en mélange avec un polybutadiène ; plus préférentiellement, le SBR a une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C, et le polybutadiène possède plus de 90% de liaisons cis-1,4.

Dans le cas d'un pneumatique pour véhicule Poids-lourd, l'élastomère diénique est de préférence un élastomère isoprénique, c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène ou un mélange de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%. Pour un tel pneumatique pour véhicule Poids-lourd, l'élastomère diénique peut être aussi constitué, en tout ou partie, d'un autre élastomère fortement insaturé tel que, par exemple, un élastomère SBR.

Les compositions des bandes de roulement de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### II-2. Charge inorganique renforçante

Par "charge inorganique renforçante", doit être entendu ici, de manière connue, toute charge inorganique ou minérale, quelles que soient sa couleur et son origine (naturelle ou de synthèse), encore appelée charge "blanche", charge "claire" ou encore charge "non-noire" (*"non-blackfiller"*) par opposition au noir de carbone, cette charge inorganique étant capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique, en particulier pour bande de roulement ; une telle charge se caractérise généralement, de manière connue, par la présence de groupes hydroxyle (-OH) à sa surface.

Préférentiellement, la charge inorganique renforçante est une charge du type siliceuse ou alumineuse, ou un mélange de ces deux types de charges.

La silice (SiO₂) utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. Les silices précipitées hautement dispersibles (dites "HDS") sont préférées, en particulier lorsque l'invention est mise en oeuvre pour la fabrication de pneumatiques présentant une faible résistance au roulement ; comme exemples de telles silices, on peut citer les silices Ultrasil 7000. de la société Degussa, les silices Zeosil 1165 MP, 1135 MP et 1115 MP de la société Rhodia, la silice Hi-Sil EZ150G de la société PPG, les silices Zeopol 8715, 8745 ou 8755 de la Société Huber, les silices à haute surface spécifique telles que décrites dans la demande WO 03/016387.

L'alumine (Al₂O₃) renforçante utilisée préférentiellement est une alumine hautement dispersible ayant une surface BET allant de 30 à 400 m²/g, plus préférentiellement entre 60 et 250 m²/g, une taille moyenne de particules au plus égale à 500 nm, plus préférentiellement au plus égale à 200 nm. Comme exemples non limitatifs de telles alumines renforçantes, on peut citer notamment les alumines "Baikalox A125" ou "CR125" (société Baïkowski), "APA-100RDX" (Condéa), "Aluminoxid C" (Degussa) ou "AKP-G015" (Sumitomo Chemicals).

A titre d'autres exemples de charge inorganique susceptible d'être utilisée dans les compositions de caoutchouc de l'invention peuvent être encore cités des (oxyde-)hydroxydes d'aluminium, des aluminosilicates, des oxydes de titane, des carbures ou nitrures de silicium, tous du type renforçants tels que décrits dans les documents WO 99/28376 (ou US 6,610,261), WO 00/73372 (ou US 6,747,087), WO 02/053634 (ou US2004-0030017), WO 2004/003067, WO 2004/056915.

Lorsque les bandes de roulement de l'invention sont destinées à des pneumatiques à faible résistance au roulement, la charge inorganique renforçante utilisée, en particulier s'il s'agit de silice, a de préférence une surface BET comprise entre 60 et 350 m2/g. Un mode de réalisation avantageux de l'invention consiste à utiliser une charge inorganique renforçante, en particulier une silice, ayant une surface spécifique BET élevée, comprise dans un domaine de 130 à 300 m²/g, en raison du haut pouvoir renforçant reconnu de telles charges. Selon un autre mode préférentiel de réalisation de l'invention, on peut utiliser une charge inorganique renforçante, en particulier une silice, présentant une surface spécifique BET inférieure à 130 m²/g, préférentiellement dans un tel cas comprise entre 60 et 130 m²/g (voir par exemple demandes WO03/002648 ou US2005-0016651, et WO03/002649 ou US 2005-0016650 qui enseignent par ailleurs l'utilisation de quantités réduites de zinc, comprises entre 0,5 et 1,5 pce, en combinaison avec des silices de basse surface spécifique).

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-dessus.

L'homme du métier saura adapter le taux de charge inorganique renforçant selon la nature de la charge inorganique utilisée et selon le type de pneumatique concerné, par exemple pneumatique pour moto, pour véhicule de tourisme ou encore pour véhicule utilitaire tel que camionnette ou Poids lourd. De préférence, ce taux de charge inorganique renforçante sera choisi compris entre 20 et 200 pce, plus préférentiellement entre 30 et 150 pce. Plus préférentiellement encore, en particulier lorsque la composition de l'invention est destinée à une bande de roulement de pneumatique, le taux de charge inorganique renforçante est choisi supérieur à 50 pce, par exemple compris entre 60 et 140 pce, en particulier dans un domaine de 70 à 130 pce.

Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 [méthode volumétrique multipoints (5 points) - gaz: azote - dégazage: 1 heure à 160°C - domaine de pression relative *p*/*po* : 0.05 à 0.17]. La surface spécifique CTAB est la surface externe déterminée selon la norme française NF T 45-007 de novembre 1987 (méthode B).

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### II-3. Agent de couplage,

On rappelle ici que par "agent de couplage" on entend, de manière connue, un agent apte à établir une liaison suffisante, de nature chimique et/ou physique, entre la charge inorganique et l'élastomère diénique ; un tel agent de couplage, au moins bifonctionnel, a par exemple comme formule générale simplifiée "Y-A-X", dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère diénique, par exemple par l'intermédiaire d'un atome de soufre;
- A représente un groupe divalent permettant de relier Y et X.

Des agents de couplage, notamment silice/ élastomère diénique ont été décrits dans un très grand nombre de documents, les plus connus étant des organosilanes bifonctionnels porteurs de fonctions alkoxyle (c'est-à-dire, par définition, des "alkoxysilanes") à titre de fonctions "Y" et, à titre de fonctions "X", de fonctions capables de réagir avec l'élastomère diénique telles que par exemple des fonctions polysulfure.

Parmi les composés alkoxysilane-polysulfure connus, doit être particulièrement cité le tétrasulfure de bis 3-triéthoxysilylpropyle (en abrégé "TESPT"), de formule [(C₂H₅O)₃Si(CH₂)₃S₂]₂, commercialisé notamment par la société Degussa sous la dénomination "Si69" (ou "X50S" lorsqu'il est supporté à 50% en poids sur du noir de carbone), sous la forme d'un mélange commercial de polysulfures Sₓ avec une valeur moyenne pour x qui est proche de 4.

Le TESPT, connu de très longue date, est considéré encore aujourd'hui comme le produit apportant le meilleur compromis en terme de sécurité au grillage, d'hystérèse et de pouvoir renforçant, pour des compositions de caoutchouc renforcées d'une charge inorganique renforçante telle que silice. Il est à ce titre l'agent de couplage de référence de l'homme du métier pour les pneumatiques chargés de silice à basse résistance au roulement, parfois qualifiés de "Pneus Verts" pour l'économie d'énergie offerte (ou *"energy-saving Green Tyres"*)*.*

Cet agent de couplage TESPT ne convient pas aux compositions de l'invention dépourvues ou pratiquement dépourvues de zinc, l'invention ayant révélé que ces dernières nécessitent notamment l'emploi d'un silane-polysulfure spécifique répondant à la formule (I) précitée.

Un tel composé de formule (I) est connu et a été décrit notamment dans la demande WO 2004/033548 (ou US2004-0129360) en tant qu'agent de couplage dans des compositions de caoutchouc chargées d'une charge inorganique telle que silice, destinées à des armatures de renforcement de sommet (ou "ceintures") de pneumatiques.

On voit bien que pour assurer la liaison entre l'élastomère diénique et la charge inorganique renforçante, il comporte par molécule:
- d'une part, à titre de fonction "X", un groupe fonctionnel polysulfure (Sₓ) capable de former une liaison stable avec l'élastomère diénique ;
- d'autre part, à titre de fonction "Y", un et un seul groupe (-OR³) par atome de silicium - fonction (=Si-OR³) - lui permettant de se greffer sur la charge inorganique renforçante par l'intermédiaire des groupes hydroxyle de surface de cette dernière ;
- les deux enchaînements Z assurant le lien entre le groupe polysulfure au centre de la molécule et les deux fonctions (≡Si-OR³) fixées à chaque extrémité de la molécule.

Les groupes Z comportant de 1 à 18 atomes de carbone représentent notamment une chaîne alkylène, un groupe cycloalkylène saturé, un groupe arylène, ou un groupe divalent constitué d'une combinaison d'au moins deux de ces groupes. Il sont de préférence choisis parmi les alkylènes en C₁-C₁₈ et les arylènes en C₆-C₁₂ ; ils peuvent être substitués ou interrompus par un ou plusieurs hétéroatomes, choisis en particulier parmi S, O et N.

Dans la formule (I) ci-dessus, on a de préférence les caractéristiques suivantes qui sont vérifiées:
- les symboles R¹ et R² sont choisis parmi méthyle, éthyle, n-propyle et isopropyle ;
- le symbole R³ est choisi parmi hydrogène, méthyle, éthyle, n-propyle et isopropyle ;
- les symboles Z sont choisis parmi les alkylènes en C₁-C₈.

Plus préférentiellement encore,
- les symboles R¹ et R² sont choisis parmi méthyle et éthyle ;
- le symbole R³ est choisi parmi hydrogène, méthyle et éthyle ;
- les symboles Z sont choisis parmi les alkylènes en C₁-C₄, notamment méthylène, éthylène ou propylène, plus particulièrement le propylène - (CH₂)₃ -.

A titre d'exemple préférentiel de polysulfure répondant à la formule (I), on citera tout particulièrement le monohydroxysilane-polysulfure de formule particulière (II) ci-après:

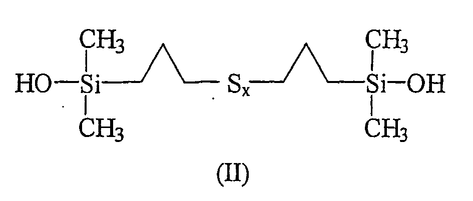

Un tel silane a par exemple été décrit, ainsi que sa synthèse, dans les demandes de brevet WO 02/30939 (ou US 6,774,255) et WO02/31041 (ou US2004-0051210), ainsi que dans la demande WO 2004/033548 (ou US2004-0129360) précitée.

A titre d'autres exemples de silane-polysulfure répondant à la formule (I), on peut également citer les polysulfures de bis-monoalkoxydiméthylsilylpropyle et les mélanges de ces polysulfures, notamment ceux de formules particulières (III), (IV) ou (V) ci-après:

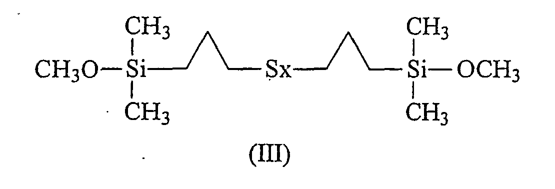

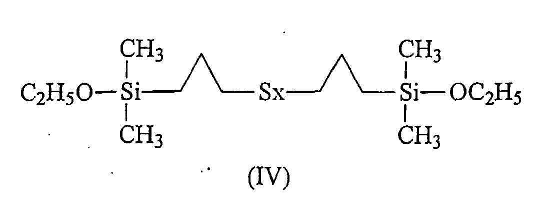

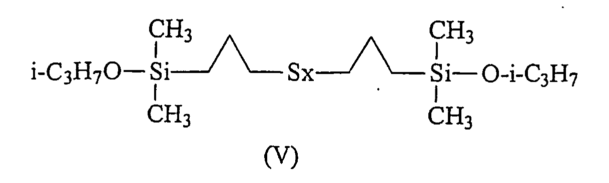

Dans les formules (I) à (V) ci-dessus, dans le cas où la voie de synthèse du silane-polysulfure considéré ne peut donner naissance qu'à une seule sorte de polysulfure, le nombre x est alors un nombre entier, compris de préférence dans un domaine de 2 à 8.

Les polysulfures sont de préférence choisis parmi les disulfures (x=2), trisulfures (x=3), tétrasulfures (x=4), pentasulfures (x=5), hexasulfures (x=6) et les mélanges de ces polysulfures, plus particulièrement parmi les disulfures, trisulfures et tétrasulfures.

Sont notamment sélectionnés, à titre plus préférentiel, les disulfures, trisulfures, tétrasulfures de bis-monohydroxydiméthylsilylpropyle (ou bis-propyldiméthylsilanol) (formule II) ou de bis-monoéthoxydiméthylsilyl-propyle (formule IV), et les mélanges de ces polysulfures.

L'homme du métier comprendra aisément que, lorsque la voie de synthèse donne naissance à un mélange de groupes polysulfures ayant chacun un nombre d'atomes de soufre différent (typiquement S₂ à S₈), alors ce nombre x est généralement un nombre fractionnaire dont la valeur moyenne peut varier selon le mode de synthèse adopté et les conditions particulières de cette synthèse. Dans un tel cas, le polysulfure synthétisé est en fait constitué d'une distribution de polysulfures centrée sur une valeur moyenne (en mole) des "x" allant préférentiellement de 2 à 8, plus préférentiellement de 2 à 6, encore plus préférentiellement comprise dans un domaine de 2 à 4.

Selon un mode de réalisation particulièrement préférentiel, on utilise le tétrasulfure (S₄) de monohydroxy-diméthylsilylpropyle de formule générale (II), ayant pour formule particulière développée (VI) :

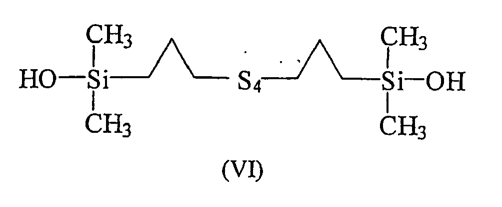

Selon un autre mode de réalisation particulièrement préférentiel, est utilisable le disulfure (S₂) de monohydroxy-diméthylsilylpropyle de formule générale (II), ayant pour formule particulière développée (VII) :

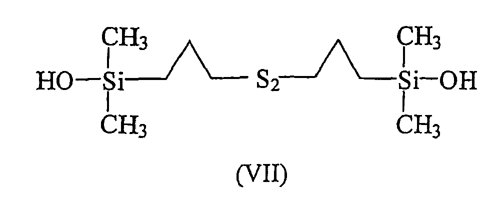

Selon un autre mode de réalisation particulier, est utilisable le tétrasulfure (S₄) de mono-éthoxy-diméthylsilylpropyle (en abrégé "MESPT") de formule générale (IV) ci-dessus, homologue monoéthoxylé du TESPT précité, de formule particulière développée (VIII) (Et=éthyle):

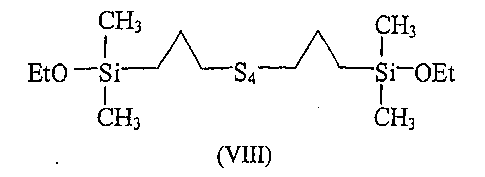

Selon un autre mode de réalisation particulier, est utilisable le disulfure (S₂) de monoéthoxy-diméthylsilylpropyle (en abrégé "MESPD") de formule générale (IV), ayant pour formule particulière développée (IX) :

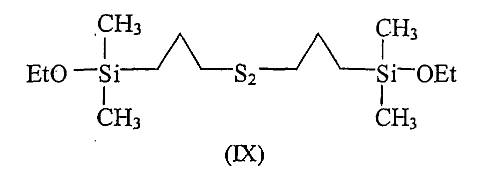

Les composés silane-polysulfure répondant aux formules (I) à (IX) ci-dessus sont bien connus et décrits dans l'art antérieur, par exemple dans les demandes EP-A-680 997 (ou US-A-5650457), EP-A-1 043 357 (ou CA-A-2 303 559), FR-A-2 823 215 (ou WO 02/83782), ou les demandes précitées WO 02/30939, WO 02/31041 et WO 2004/033548.

L'homme du métier saura ajuster la teneur en polysulfure de formule (I) en fonction des modes de réalisation particuliers de l'invention, notamment de la quantité de charge inorganique renforçante utilisée, le taux préférentiel représentant entre 2% et 20% en poids par rapport à la quantité de charge inorganique renforçante ; des taux inférieurs à 15%, notamment inférieurs à 10%, sont plus particulièrement préférés.

Compte tenu des quantités exprimées ci-dessus, de manière générale, la teneur en silane-polysulfure est de préférence comprise entre 2 et 15 pce. En dessous du minima indiqué l'effet risque d'être insuffisant, alors qu'au delà du maximum préconisé on n'observe généralement plus d'amélioration, alors que les coûts de la composition augmentent ; pour ces différentes raisons, cette teneur est plus préférentiellement encore comprise entre 2 et 12 pce.

### II-4. Noir de carbone

La composition de caoutchouc de l'invention a pour autre caractéristique essentielle de comporter moins de 5, de préférence moins de 4 pce de noir de carbone, plus préférentiellement moins de 3 pce de noir de carbone (notamment entre 0,05 et 3 pce) ; elle peut être totalement dépourvue (soit zéro pce) de noir de carbone.

Comme noirs de carbone conviennent tous les noirs de carbone susceptibles d'apporter une coloration noire aux compositions de caoutchouc, notamment les noirs du type HAF, ISAF et SAF connus de l'homme du métier et conventionnellement utilisés dans les pneumatiques. Parmi ces derniers, on peut citer les noirs de carbone renforçants des séries (grades ASTM) 100, 200 ou 300 utilisés dans les bandes de roulement de ces pneumatiques (par exemple N115, N134, N234, N326, N330, N339, N347, N375), mais encore ceux du type non-renforçants (car moins structurés) des séries plus élevées 400 à 700 (par exemple les noirs N660, N683, N772). On pourrait aussi utiliser à titre d'exemple des noirs non-renforçants dits "noirs d'encre".

Les noirs de carbone peuvent être utilisés à l'état isolé, tels que disponibles commercialement, ou sous tout autre forme, par exemple comme support de certains des additifs de caoutchouterie utilisés.

### II-5. Additifs divers

Les compositions de caoutchouc conformes à l'invention peuvent comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269 (ou US2003-0212185), un système de réticulation à base soit de soufre, soit de donneurs de soufre et/ou de peroxyde et/ou de bismaléimides, des accélérateurs de vulcanisation, des activateurs de vulcanisation exclusion faite bien entendu des activateurs à base de zinc.

De préférence, ces compositions comportent, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés. Le taux global d'un tel agent plastifiant préférentiel est de préférence compris entre 15 et 45 pce, plus préférentiellement entre 20 et 40 pce.

Parmi ces résines plastifiantes hydrocarbonées (on rappelle que l'appellation "résine" est réservée par définition à un composé solide), on citera notamment les résines d'homo- ou copolymères d'alphapinène, betapinène, dipentène ou polylimonène, coupe C5, par exemple de copolymère coupe C5/styrène, utilisables seules ou en combinaison avec des huiles plastifiantes comme des huiles MES ou TDAE.

A la charge renforçante précédemment décrite (i.e., charge inorganique renforçante plus noir de carbone, le cas échéant) peuvent être également ajoutés, selon l'application visée, des charges inertes (non renforçantes) telles que particules d'argile, bentonite, talc, craie, kaolin, utilisables par exemple dans des flancs ou des bandes de roulement de pneumatique colorés.

Ces compositions peuvent également contenir, en complément des agents de couplage, des activateurs de couplage, des agents de recouvrement (comportant par exemple la seule fonction Y) de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylène glycols), des amines primaires, secondaires ou tertiaires (par exemple des trialcanol-amines), des POS hydroxylés ou hydrolysables, par exemple des α,ω-dihydroxy-polyorganosiloxanes (notamment des α,ω-dihydroxy-polydiméthylsiloxanes), des acides gras comme par exemple l'acide stéarique.

### II-6. Fabrication des compositions de caoutchouc

L'invention a également pour objet un procédé pour préparer une composition de caoutchouc à base d'un élastomère diénique et d'une charge inorganique renforçante, dépourvue ou pratiquement dépourvue de zinc (i.e., comportant moins de 0,5 pce de zinc) et présentant une processabilité à l'état cru améliorée, ce procédé étant caractérisé en ce qu'on incorpore par malaxage, à au moins un élastomère diénique, au moins une charge inorganique à titre de charge renforçante, un silane-polysulfure de formule (I) précitée et de 0 à moins de 5 pce, de préférence de 0 à moins de 4 pce de noir de carbone.

Les compositions de caoutchouc de l'invention sont fabriquées dans des mélangeurs appropriés, en utilisant deux phases de préparation successives selon une procédure générale bien connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon un mode de réalisation préférentiel de l'invention, tous les constituants de base des compositions de l'invention, à l'exception du système de vulcanisation, à savoir la charge inorganique renforçante, l'agent de couplage de formule (I) et le noir de carbone sont incorporés de manière intime, par malaxage, à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de vulcanisation. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation à basse température, généralement dans un mélangeur externe tel qu'un mélangeur à cylindres ; le tout est alors mélangé (phase productive) pendant quelques minutes, par exemple entre 2 et 15 min.

Le système de vulcanisation proprement dit est préférentiellement à base de soufre et d'un accélérateur. On peut utiliser tout composé susceptible d'agir comme accélérateur de vulcanisation des élastomères diéniques en présence de soufre, en particulier ceux choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés. De préférence, on utilise un accélérateur primaire du type sulfénamide.

A ce système de vulcanisation peuvent venir s'ajouter, incorporés au cours de la première phase non-productive et/ou au cours de la phase productive, divers accélérateurs secondaires ou activateurs de vulcanisation connus, à l'exclusion du zinc et de tout dérivé de zinc tel que ZnO, tels que par exemple des acides gras comme l'acide stéarique, des dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule tourisme.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

En résumé, le procédé conforme à l'invention pour préparer une composition de caoutchouc à base d'un élastomère diénique et d'une charge inorganique renforçante, dépourvue ou pratiquement dépourvue de zinc (i.e., comportant moins de 0,5 pce de zinc) et présentant une processabilité améliorée, comporte les étapes caractéristiques préférentielles suivantes :
- incorporer à un élastomère diénique, dans un mélangeur :
   - une charge inorganique renforçante ;
   - un silane polysulfure à titre d'agent de couplage ;
   - optionnellement du noir de carbone,
      en malaxant thermomécaniquement le tout, en une ou plusieurs fois, jusqu'à atteindre une température maximale comprise entre 130°C et 200°C ;
- refroidir l'ensemble à une température inférieure à 100°C ;
- incorporer ensuite :
   - un système de vulcanisation dépourvu de zinc ou tel que le taux de zinc dans la composition finale est inférieur à 0,5 pce ;
- malaxer le tout jusqu'à une température maximale inférieure à 120°C ;
- extruder ou calandrer la composition de caoutchouc ainsi obtenue,
et il est caractérisé en ce que le taux de noir de carbone optionnel est inférieur à 5 pce et en ce que le silane polysulfure répond à la formule (I) précitée.

Dans ce procédé conforme à l'invention, on a de préférence au moins une, plus préférentiellement l'ensemble des caractéristiques suivantes qui est vérifié(e) :
- le taux de zinc de la composition est inférieur à 0,3 pce ;
- la quantité de charge inorganique renforçante est comprise entre 20 et 200 pce, plus préférentiellement entre 30 et 150 pce;
- la quantité d'agent de couplage est comprise entre 2 et 15 pce;
- la température maximale de malaxage thermomécanique est comprise entre 145°C et 185°C;
- la charge inorganique renforçante est une charge siliceuse ou alumineuse;
- la quantité de noir de carbone est inférieure à 4 pce, de préférence inférieur à 3 pce;
- l'élastomère diénique est un copolymère de butadiène-styrène (SBR), de préférence utilisé en mélange avec un polybutadiène (BR).

Plus préférentiellement, dans ce procédé, on a au moins une, encore plus préférentiellement l'ensemble des caractéristiques suivantes qui est vérifié(e) :
- le taux de zinc de la composition est nul (soit 0 pce) ;
- la quantité de charge inorganique est supérieure à 50 pce, notamment comprise entre 60 et 140 pce, par exemple dans un domaine de 70 à 130 pce;
- la quantité d'agent de couplage est comprise entre 2 et 12 pce, en particulier entre 3 et 8 pce;
- la charge inorganique renforçante est de la silice;
- la quantité de noir de carbone est comprise entre 0,05 et 3 pce, plus préférentiellement entre 0,1 et 2 pce;
- le silane polysulfure est un polysulfure, notamment disulfure ou tétrasulfure, de bis-hydroxysilylpropyle ou de bis-alkoxyl(C₁-C₄)silylpropyle ;
- le SBR est un SBR préparé en solution et le BR possède plus de 90% de liaisons cis-1,4.

### III. EXEMPLES DE REALISATION DE L'INVENTION

### III-1. Préparation des compositions

On procède pour les essais qui suivent de la manière suivante: on introduit dans un mélangeur interne, rempli à 70% et dont la température initiale de cuve est d'environ 60°C, successivement la charge (silice et noir de carbone optionnel), l'agent de couplage, l'élastomère diénique ainsi que les divers autres ingrédients à l'exception du système de vulcanisation. On conduit alors un travail thermomécanique (phase non-productive) en une étape, qui dure au total environ 3 à 4 minutes, jusqu'à atteindre une température maximale de "tombée" de 165°C. On récupère le mélange ainsi obtenu, on le refroidit puis on incorpore le système de vulcanisation (soufre et accélérateur primaire type sulfénamide) sur un mélangeur externe (homo-finisseur) à 30°C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou feuilles fines de caoutchouc pour la mesure de leurs propriétés physiques ou mécaniques, soit extrudées sous la forme de bandes de roulement.

Dans les essais qui suivent, selon un mode de réalisation particulièrement préférentiel, on utilise du noir de carbone selon un taux compris entre 0,1 et 2 pce.

### III-2. Essais

### A) Essai 1

Dans ce premier essai, on compare cinq compositions utilisables pour la fabrication de bandes de roulement de pneus à carcasse radiale pour véhicule automobile du type tourisme, à base d'élastomères diéniques SBR et BR connus et renforcées par de la silice.

Ces cinq compositions sont identiques à la nature près de l'agent de couplage, à la présence ou non d'oxyde de zinc et à la quantité de noir de carbone utilisée, comme indiqué ci-après :
- composition C-1 : silane TESPT ; 1,5 pce de ZnO ; 5 pce de noir de carbone ;
- composition C-2 : silane TESPT ; sans ZnO ; 5 pce de noir de carbone ;
- composition C-3 : silane TESPT ; sans ZnO ; 1 pce de noir de carbone ;
- composition C-4 : silane monofonctionnel ; sans ZnO ; 5 pce de noir de carbone ;
- composition C-5 : silane monofonctionnel ; sans ZnO ; 1 pce de noir de carbone.

La composition C-1 constitue la référence, celle utilisée dans les pneumatiques dits "Verts" à faible consommation d'énergie ; elle utilise de manière conventionnelle de l'oxyde de zinc comme activateur de vulcanisation (à 1,5 pce de dérivé ZnO correspondent environ 1,2 pce de métal Zn), du noir de carbone à un taux usuel de 5 pce et le silane TESPT comme agent de couplage, de formule développée (Et = éthyle) :

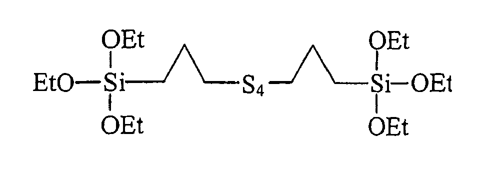

La composition C-5 est la seule conforme à l'invention puisque dépourvue (totalement) de zinc (ou dérivé de zinc), incorporant moins de 5 pce de noir de carbone et un silane monofonctionnel de formule (I). Plus précisément, ce silane monofonctionnel est le silane préférentiel de formule (VI) indiquée précédemment :

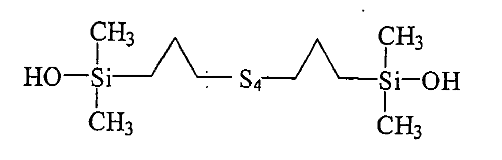

Il a été préparé de manière connue, comme indiqué dans les demandes WO 02/30939 et WO 02/31041 précitées, puis introduit à un taux de couverture surfacique de la silice qui est sensiblement équivalent par rapport au témoin TESPT. En d'autres termes, les deux agents de couplage sont utilisés ici à un taux sensiblement isomolaire en silicium, c'est-à-dire qu'on utilise, quelle que soit la composition, le même nombre de moles de fonctions Y (ici Y = Si(OEt)₃) ou Y = Si(OH)(CH₃)₂ selon le cas) réactives vis-à-vis de la silice et de ses groupes hydroxyles de surface.

Les tableaux 1 et 2 donnent successivement la formulation des différentes compositions (tableau 1 - taux des différents produits exprimés en pce), leurs propriétés avant et après cuisson à 165°C pendant 15 min (tableau 2).

A la lecture du tableau 2, on constate tout d'abord que les propriétés après cuisson sont sensiblement identiques d'une composition à l'autre en termes de dureté Shore, de modules en traction et rapports de modules M300/M100, de propriétés à la rupture, avec en outre des propriétés d'hystérèse améliorées pour la composition C-5 qui possède les valeurs les plus basses de tan(δ)ₘₐₓ et surtout de ΔG*, autant d'indicateurs clairs qui attestent d'un excellent potentiel de la composition de l'invention C-5 dans une bande de roulement de pneumatique, notamment en termes de résistance au roulement.

Mais ce sont les propriétés avant cuisson qui démontrent sans conteste tout l'intérêt de l'invention :
- tout d'abord, on note que la suppression de ZnO dans la composition C-2 se traduit par une chute très sensible (50%) du temps de grillage par rapport à la composition de référence C-1, T5 passant de 12 min à 6 min ; une telle réduction est considérée par l'homme du métier comme rédhibitoire du point de vue industriel ;
- la simple diminution du taux de noir de carbone de 5 pce à 1 pce est sans effet notable sur le paramètre T5 (comparer composition C-3 à la composition C-2);
- ni d'ailleurs le remplacement de l'agent de couplage conventionnel TESPT par le silane monofonctionnel (comparer composition C-4 à la composition C-2) ;
- de manière inattendue, seule la composition C-5 conforme à l'invention, comportant en combinaison le silane monofonctionnel et le très faible taux de noir de carbone, permet de retrouver, en l'absence de ZnO, une sécurité au grillage acceptable du point de vue industriel (T5 > 10 min), équivalente à celle de la composition témoin C-1 de départ.

### B) Essai 2

Dans ce second essai, on compare cinq autres compositions à base d'élastomères diéniques SBR et BR connus et renforcées par de la silice.

Ces cinq compositions sont identiques à la nature près de l'agent de couplage, à la présence ou non d'oxyde de zinc et à la quantité de noir de carbone utilisée, comme indiqué ci-après :
- composition C-6 : silane TESPT ; 1,5 pce de ZnO ; 5 pce de noir de carbone ;
- composition C-7 : silane TESPT ; sans ZnO ; 5 pce de noir de carbone ;
- composition C-8 : silane TESPT ; sans ZnO ; 3 pce de noir de carbone ;
- composition C-9 : silane monofonctionnel ; sans ZnO ; 3 pce de noir de carbone ;
- composition C-10 : silanemonofonctionnel ; sans ZnO ; 0,3 pce de noir de carbone.

La composition C-6 constitue la référence (Pneus "Verts"), utilisant de manière conventionnelle de l'oxyde de zinc comme activateur de vulcanisation (à 1,5 pce de ZnO correspondent 1,2 pce de Zn), du noir de carbone à un taux usuel de 5 pce et le silane TESPT comme agent de couplage.

Seules les compositions C-9 et C-10 sont conformes à l'invention puisque dépourvues (totalement) de zinc (ou dérivé de zinc), incorporant moins de 5 pce de noir de carbone et un silane monofonctionnel de formule (I). Plus précisément, ce silane monofonctionnel est le silane préférentiel de formule (VIII) indiquée précédemment (Et = éthyle):

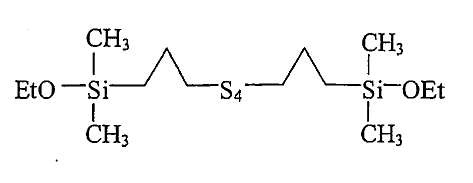

Il a été préparé de manière connue, comme indiqué dans la demande WO 02/83782 précitée, puis introduit à un taux de couverture surfacique de la silice qui est sensiblement équivalent par rapport au témoin TESPT. En d'autres termes, les deux agents de couplage sont utilisés ici à un taux sensiblement isomolaire en silicium, c'est-à-dire qu'on utilise, quelle que soit la composition, le même nombre de moles de fonctions Y (ici Y = Si(OEt)₃) ou Y = Si(OEt)(CH₃)₂ selon le cas) réactives vis-à-vis de la silice et de ses groupes hydroxyles de surface.

Les tableaux 3 et 4 donnent successivement la formulation des différentes compositions (tableau 3 - taux des différents produits exprimés en pce), leurs propriétés avant et après cuisson à 165°C pendant 15 min (tableau 3).

A la lecture du tableau 4, on constate tout d'abord que les propriétés après cuisson sont proches d'une composition à l'autre en termes de dureté Shore, de modules en traction et rapports de modules M300/M100, de propriétés à la rupture, avec en outre des propriétés d'hystérèse améliorées pour les compositions C-9 et C-10 qui possèdent les valeurs les plus basses de tan(δ)ₘₐₓ et surtout de ΔG*, autant d'indicateurs qui attestent d'un excellent potentiel de ces deux compositions dans une bande de roulement de pneumatique, notamment en termes de résistance au roulement.

Mais ce sont les propriétés avant cuisson qui démontrent une nouvelle fois et confirment l'intérêt de l'invention :
- tout d'abord, on note que la suppression de ZnO dans la composition C-7 se traduit par une chute rédhibitoire de 50% du temps de grillage par rapport à la composition de référence C-6, T5 passant de 14 min à 7 min ;
- la simple diminution du taux de noir de carbone de 5 pce à 3 pce est sans effet notable sur le paramètre T5 (comparer composition C-8 à la composition C-7);
- de manière inattendue, seules les compositions C-9 et C-10 conformes à l'invention, comportant en combinaison le silane monofonctionnel et le très faible taux de noir de carbone (respectivement, 3 et 0,3 pce) permettent de retrouver, en l'absence de ZnO, une sécurité au grillage acceptable du point de vue industriel (T5>10 min), équivalente à celle de la composition témoin C-6 de départ, voire même améliorée dans le cas du très très faible taux (0,3 pce) de noir de carbone de la composition C-10.

En résumé, les essais comparatifs ci-dessus démontrent clairement que le simple remplacement du TESPT par un silane monofonctionnel de formule (I), ou la seule réduction du taux de noir de carbone à un très faible niveau, ne constitue pas une solution satisfaisante pour pallier les problèmes de mise en oeuvre (réduction du temps de grillage) dus à la suppression du zinc ou oxyde de zinc dans le système de vulcanisation.

Seule l'utilisation de l'agent de couplage de formule (I), en combinaison avec un très faible taux de noir de carbone (0 à moins de 5 pce), permet d'éliminer totalement, sans le remplacer par un autre métal, le zinc ou tout dérivé de zinc des compositions de caoutchouc, en préservant la processabilité à l'état cru de ces dernières.

L'invention trouve des applications particulièrement avantageuses dans les compositions de caoutchouc destinées à la fabrication de bandes de roulement de pneumatiques, en particulier lorsque ces bandes de roulement sont destinées à des pneumatiques pour véhicules tourisme, motos ou véhicules industriels du type Poids-lourd.

**Tableau 1**

| Composition No: | C-1 | C-2 | C-3 | C-4 | C-5 |
|---|---|---|---|---|---|
| SBR (1) | 69 | 69 | 69 | 69 | 69 |
| BR (2) | 31 | 31 | 31 | 31 | 31 |
| silice (3) | 81 | 81 | 81 | 81 | 81 |
| silane (4) | 6.5 | 6.5 | 6.5 | - | - |
| silane (5) | - | - | - | 4.3 | 4.3 |
| plastifiant (6) | 16 | 16 | 16 | 16 | 16 |
| plastifiant (7) | 12 | 12 | 12 | 12 | 12 |
| cire anti-ozone | 1.5 | 1.5 | 1.5 | 1.5 | 1.5 |
| antioxydant (8) | 1.9 | 1.9 | 1.9 | 1.9 | 1.9 |
| DPG (9) | 1.5 | 1.5 | 1.5 | 1.5 | 1.5 |
| noir de carbone (10) | 5 | 5 | 1 | 5 | 1 |
| ZnO | 1.5 | 0 | 0 | 0 | 0 |
| acide stéarique | 2 | 2 | 2 | 2 | 2 |
| soufre. | 1.1 | 1.1 | 1.1 | 1.1 | 1.1 |
| accélérateur (11) | 2 | 2 | 2 | 2 | 2 |

| | | | | | |
|---|---|---|---|---|---|
| (1) SBR (exprimé en SBR sec) étendu avec 10% en poids (6.9 pce) d'huile MES soit au total 75.9 pce de SBR étendu) ; 25% de styrène, 58% de motifs polybutadiène 1-2 et 23% de motifs polybutadiène 1-4 trans (Tg = -24°C) ; (2) BR avec 4,3% de 1-2 ; 2,7% de trans ; 93% de cis 1-4 (Tg = -106°C) ; (3) silice type "HDS" ("Zeosil 1165MP" de la société Rhodia - BET et CTAB : environ 160 m²/g) ; (4) agent de couplage TESPT ("Si69" de la société Degussa) ; (5) silane monofonctionnel de formule (VI) ; (6) huile MES (Flexon 683, société Exxon Mobil) ; (7) résine hydrocarbonée plastifiante à haute Tg (73 °C) (résine polylimonène "Dercolyte L120" - société DRT) ; (8) N-1,3-diméthylbutyl-N-phénylparaphénylènediamine (Santoflex 6-PPD de la société Flexsys) ; (9) diphénylguanidine (Perkacit DPG de la société Flexsys) ; (10) noir de carbone N234 ; (11) N-cyclohexyl-2-benzothiazyl-sulfénamide (Santocure CBS de la société Flexsys). | | | | | |

**Tableau 2**

| Composition No : | C-1 | C-2 | C-3 | C-4 | C-5 |
|---|---|---|---|---|---|
| *Propriétés avant cuisson :* | | | | | |
| Mooney (UM) | 92 | 99 | 94 | 101 | 94 |
| Temps de grillage T5 (min) | 12 | 6 | 7 | 8 | 11 |
| | | | | | |
| *Propriétés après cuisson :* | | | | | |
| Dureté shore A | 68 | 67 | 66 | 67 | 66 |
| M100 (MPa) | 1.96 | 1.99 | 1.92 | 1.87 | 1.81 |
| M300 (MPa) | 2.34 | 2.56 | 2.50 | 2.24 | 2.12 |
| M300/M100 | 1.2 | 1.3 | 1.3 | 1.2 | 1.2 |
| Contrainte rupture (MPa) | 21.7 | 20.4 | 21.4 | 21.5 | 20.4 |
| Allongement rupture (%) | 496 | 454 | 469 | 566 | 538 |
| tan(δ)ₘₐₓ | 0.33 | 0.33 | 0.32 | 0.32 | 0.30 |
| ΔG* | 5.3 | 4.3 | 3.9 | 4.0 | 3.3 |

**Tableau 3**

| Composition No : | C-6 | C-7 | C-8 | C-9 | C-10 |
|---|---|---|---|---|---|
| SBR (1) | 70 | 70 | 70 | 70 | 70 |
| BR (2) | 30 | 30 | 30 | 30 | 30 |
| silice (3) | 80 | 80 | 80 | 80 | 80 |
| silane (4) | 6.5 | 6.5 | 6.5 | - | - |
| silane (5) | - | - | - | 5.0 | 5.0 |
| plastifiant (6) | 16 | 16 | 16 | 16 | 16 |
| plastifiant (7) | 12 | 12 | 12 | 12 | 12 |
| cire anti-ozone | 1.5 | 1.5 | 1.5 | 1.5 | 1.5 |
| antioxydant (8) | 1.9 | 1.9 | 1.9 | 1.9 | 1.9 |
| DPG (9) | 1.5 | 1.5 | 1.5 | 1.5 | 1.5 |
| noir de carbone (10) | 5 | 5 | 3 | 3 | 0.3 |
| ZnO | 1.5 | 0 | 0 | 0 | 0 |
| acide stéarique | 2 | 2 | 2 | 2 | 2 |
| soufre | 1.1 | 1.1 | 1.1 | 1.1 | 1.1 |
| accélérateur (11) | 2 | 2 | 2 | 2 | 2 |

| | | | | | |
|---|---|---|---|---|---|
| (1) SBR (exprimé en SBR sec) étendu avec 10% en poids (6.9 pce) d'huile MES soit au total 75.9 pce de SBR étendu) ; 25% de styrène, 58% de motifs polybutadiène 1-2 et 23% de motifs polybutadiène 1-4 trans (Tg = -24°C) ; (2) BR avec 4,3% de 1-2 ; 2,7% de trans ; 93% de cis 1-4 (Tg = -106°C) ; (3) silice type "HDS" ("Zeosil 1165MP" de la société Rhodia - BET et CTAB : environ 160 m²/g) ; (4) agent de couplage TESPT ("Si69" de la société Degussa) ; (5) silane monofonctionnel de formule (VIII) ; (6) huile MES (Flexon 683, société Exxon Mobil) ; (7) résine hydrocarbonée plastifiante à haute Tg (73 °C) (résine polylimonène "Dercolyte L120" - société DRT) ; (8) N-1,3-diméthylbutyl-N-phénylparaphénylènediamine (Santoflex 6-PPD de la société Flexsys) ; (9) diphénylguanidine (Perkacit DPG de la société Flexsys) ; (10) noir de carbone N234 ; (11) N-cyclohexyl-2-benzothiazyl-sulfénamide (Santocure CBS de la société Flexsys). | | | | | |

**Tableau 4**

| Composition No : | C-6 | C-7 | C-8 | C-9 | C-10 |
|---|---|---|---|---|---|
| *Propriétés avant cuisson :* | | | | | |
| Mooney (UM) | 1.06 | 114 | 111 | 108 | 100 |
| Temps de grillage T5 (min) | 14 | 7 | 8 | 13 | 18 |
| | | | | | |
| *Propriétés après cuisson :* | | | | | |
| Dureté shore A | 67 | 68 | 68 | 66 | 65 |
| M100 (MPa) | 1.9 | 2.2 | 2.2 | 1.9 | 1.9 |
| M300 (MPa) | 2.4 | 2.8 | 2.7 | 2.2 | 2.2 |
| M300/M100 | 1.3 | 1.3 | 1.2 | 1.2 | 1.2 |
| Contrainte rupture (MPa) | 21.1 | 20.2 | 20.5 | 22.4 | 20.2 |
| Allongement rupture (%) | 524 | 438 | 460 | 517 | 515 |
| tan(δ)ₘₐₓ | 0.33 | 0.33 | 0.33 | 0.30 | 0.29 |
| ΔG* | 4.4 | 3.8 | 4.1 | 3.0 | 3.1 |

## Revendications

1. Composition de caoutchouc dépourvue ou contenant moins de 0,5 pce de zinc, comportant (pce = parties en poids pour cent parties d'élastomère) :
- un élastomère diénique ;
- une charge inorganique renforçante ;
- optionnellement du noir de carbone, à un taux inférieur à 5 pce ;
- un silane-polysulfure de formule (I) : 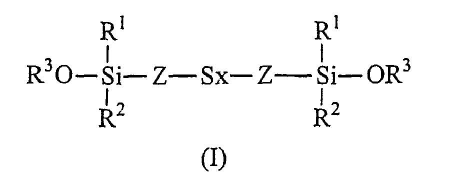
dans laquelle :
- les symboles R¹ et R², identiques ou différents, représentent chacun un groupe hydrocarboné monovalent choisi parmi les alkyles, linéaires ou ramifiés, ayant de 1 à 6 atomes de carbone et le radical phényle ;
- les symboles R³ identiques ou différents, représentent chacun l'hydrogène ou un groupe hydrocarboné monovalent choisi parmi les alkyles, linéaires ou ramifiés, ayant de 1 à 4 atomes de carbone et les alkoxyalkyles, linéaires ou ramifiés, ayant de 2 à 8 atomes de carbone ;
- les symboles Z, identiques ou différents, sont des groupes de liaison divalents comportant de 1 à 18 atomes de carbone ;
- x est un nombre entier ou fractionnaire égal ou supérieur à 2.

2. Composition selon la revendication 1, les caractéristiques suivantes étant vérifiées :
- les symboles R¹ et R² sont choisis parmi méthyle, éthyle, n-propyle et isopropyle ;
- le symbole R³ est choisi parmi hydrogène, méthyle, éthyle, n-propyle et isopropyle ;
- les symboles Z sont choisis parmi les alkylènes en C₁-C₈.

3. Composition selon la revendication 2, les caractéristiques suivantes étant vérifiées :
- les symboles R¹ et R² sont choisis parmi méthyle et éthyle ;
- le symbole R³ est choisi parmi hydrogène, méthyle et éthyle ;
- les symboles Z sont choisis parmi les alkylènes en C₁-C₄.

4. Composition selon la revendication 3, Z étant le propylène.

5. Composition selon l'une quelconque des revendications 1 à 4, le silane-polysulfure étant choisi parmi les polysulfures de bis-monohydroxydiméthylsilylpropyle et les mélanges de ces polysulfures

6. Composition selon l'une quelconque des revendications 1 à 4, le silane-polysulfure étant choisi parmi les polysulfures de bis-monoalkoxydiméthylsilylpropyle et les mélanges de ces polysulfures.

7. Composition selon l'une quelconque des revendications 1 à 6, le polysulfure étant choisi parmi les disulfures (x=2), trisulfures (x=3), tétrasulfures (x=4), pentasulfures (x=5), hexasulfures (x=6) et les mélanges de ces polysulfures.

8. Composition selon l'une quelconque des revendications 1 à 7, l'élastomère diénique étant choisi dans le groupe constitué par les polybutadiènes, les polyisoprènes synthétique, le caoutchouc naturel, les copolymères de butadiène, les copolymères d'isoprène et les mélanges de ces élastomères.

9. Composition selon l'une quelconque des revendications 1 à 8, la charge inorganique renforçante étant une charge siliceuse ou alumineuse.

10. Composition selon l'une quelconque des revendications 1 à 9, le taux de charge inorganique étant compris entre 20 et 200 pce

11. Composition selon la revendication 10, le taux de charge inorganique étant compris entre 30 et 150 pce.

12. Composition selon la revendication 11, le taux de charge inorganique étant supérieur à 50 pce.

13. Composition selon la revendication 12, le taux de charge inorganique étant compris entre 60 et 140 pce.

14. Composition selon la revendication 13, le taux de charge inorganique étant compris entre 70 et 130 pce.

15. Composition selon l'une quelconque des revendications 1 à 13, le taux d'agent de couplage étant compris entre 2 et 15 pce.

16. Composition selon la revendication 14, le taux d'agent de couplage étant compris entre 2 et 12 pce.

17. Composition selon l'une quelconque des revendications 1 à 16, le taux de noir de carbone étant inférieur à 4 pce.

18. Composition selon la revendication 16, le taux de noir de carbone étant inférieur à 3 pce.

19. Composition selon la revendication 18, le taux de noir de carbone étant compris entre 0,05 et 3 pce, de préférence entre 0,1 et 2 pce.

20. Composition selon l'une quelconque des revendications 1 à 19, **caractérisée en ce que** son taux de zinc est inférieur à 0,3 pce.

21. Composition selon la revendication 20, **caractérisée en ce que** son taux de zinc est nul.

22. Procédé pour préparer une composition de caoutchouc à base d'un élastomère diénique et d'une charge inorganique renforçante, dépourvue ou contenant moins de 0,5 pce de zinc, et présentant une processabilité à l'état cru améliorée, ce procédé étant **caractérisé en ce qu'**on incorpore par malaxage, à au moins un élastomère diénique, au moins une charge inorganique à titre de charge renforçante, de 0 à moins de 5 pce de noir de carbone et un silane-polysulfure de formule (I) : 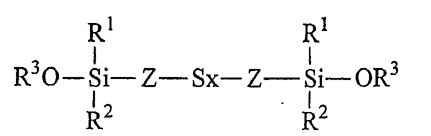 dans laquelle :
- les symboles R¹ et R², identiques ou différents, représentent chacun un groupe hydrocarboné monovalent choisi parmi les alkyles, linéaires ou ramifiés, ayant de 1 à 6 atomes de carbone et le radical phényle ;
- les symboles R³, identiques ou différents, représentent chacun l'hydrogène ou un groupe hydrocarboné monovalent choisi parmi les alkyles, linéaires ou ramifiés, ayant de 1 à 4 atomes de carbone et les alkoxyalkyles, linéaires ou ramifiés, ayant de 2 à 8 atomes de carbone ;
- les symboles Z, identiques ou différents, sont des groupes de liaison divalents comportant de 1 à 18 atomes de carbone ;
- x est un nombre entier ou fractionnaire égal ou supérieur à 2.

23. Procédé selon la revendication 22, comportant les étapes suivantes :
- incorporer à l'élastomère diénique, dans un mélangeur :
• la charge inorganique renforçante ;
• le silane polysulfure de formule (I) à titre d'agent de couplage ;
• 0 à moins de 5 pce du noir de carbone ;
en malaxant thermomécaniquement le tout, en une ou plusieurs fois, jusqu'à atteindre une température maximale comprise entre 130°C et 200°C ;
- refroidir l'ensemble à une température inférieure à 100°C ;
- incorporer ensuite :
• un système de vulcanisation dépourvu de zinc ou tel que le taux de zinc dans la composition finale est inférieur à 0,5 pce ;
- malaxer le tout jusqu'à une température maximale inférieure à 120°C ;
- extruder ou calandrer la composition de caoutchouc ainsi obtenue.

24. Procédé selon les revendications 22 ou 23, les caractéristiques suivantes étant vérifiées :
- les symboles R¹ et R² sont choisis parmi méthyle, éthyle, n-propyle et isopropyle ;
- le symbole R³ est choisi parmi hydrogène, méthyle, éthyle, n-propyle et isopropyle ;
- les symboles Z sont choisis parmi les alkylènes en C₁-C₈.

25. Procédé selon la revendication 24, les caractéristiques suivantes étant vérifiées :
- les symboles R¹ et R² sont choisis parmi méthyle et éthyle ;
- le symbole R³ est choisi parmi hydrogène, méthyle et éthyle ;
- les symboles Z sont choisis parmi les alkylènes en C₁-C₄.

26. Procédé selon la revendication 25, Z étant le propylène.

27. Procédé selon l'une quelconque des revendications 22 à 26, le silane-polysulfure étant choisi parmi les polysulfures de bis-monohydroxydiméthylsilylpropyle et les mélanges de ces polysulfures.

28. Procédé selon l'une quelconque des revendications 22 à 26, le silane-polysulfure étant choisi parmi les polysulfures de bis-monoalkoxydiméthylsilylpropyle et les mélanges de ces polysulfures.

29. Procédé selon l'une quelconque des revendications 22 à 28, le polysulfure étant choisi parmi les disulfurés (x=2), trisulfures (x=3), tétrasulfures (x=4), pentasulfures (x=5), hexasulfures (x=6) et les mélanges de ces polysulfures.

30. Procédé selon l'une quelconque des revendications 22 à 29, l'élastomère diénique étant choisi dans le groupe constitué par les polybutadiènes, les polyisoprènes synthétiques, le caoutchouc naturel, les copolymères de butadiène, les copolymères d'isoprène et les mélanges de ces élastomères.

31. Procédé selon l'une quelconque des revendications 22 à 30, la charge inorganique renforçante étant une charge siliceuse ou alumineuse.

32. Procédé selon l'une quelconque des revendications 22 à 31, le taux de charge inorganique étant compris entre 20 et 200 pce.

33. Procédé selon l'une quelconque des revendications 22 à 32, le taux d'agent de couplage étant compris entre 2 et 15 pce.

34. Procédé selon l'une quelconque des revendications 22 à 33, le taux de noir de carbone étant inférieur à 4 pce.

35. Procédé selon la revendication 34, le taux de noir de carbone étant inférieur à 3 pce.

36. Procédé selon la revendication 35, le taux de noir de carbone étant compris entre 0,05 et 3 pce.

37. Procédé selon la revendication 36, le taux de noir de carbone étant compris entre 0,1 et 2 pce.

38. Procédé selon l'une quelconque des revendications 22 à 37, **caractérisé en ce que** le taux en zinc de la composition est inférieur à 0,3 pce.

39. Procédé selon la revendication 38, **caractérisé en ce que** le taux en zinc de la composition est égal à zéro.

40. Système de liaison au sol pour véhicule automobile comportant une composition de caoutchouc selon l'une quelconque des revendications 1 à 21.

41. Pneumatique comportant une composition de caoutchouc selon l'une quelconque des revendications 1 à 21.

42. Bande de roulement de pneumatique comportant une composition de caoutchouc selon l'une quelconque des revendications 1 à 21.

## Claims

1. A rubber composition devoid of or containing less than 0.5 phr of zinc, comprising (phr = parts by weight per hundred parts of elastomer):
- a diene elastomer;
- a reinforcing inorganic filler;
- optionally carbon black, in an amount less than 5 phr;
- a silane polysulphide of formula (I): 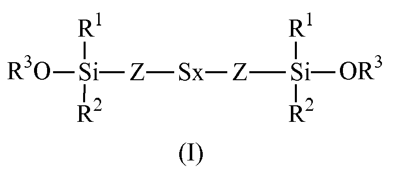
in which:
- the symbols R¹ and R², which may be identical or different, each represent a monovalent hydrocarbon group selected from among alkyls, whether straight-chain or branched, having from 1 to 6 carbon atoms and the phenyl radical;
- the symbols R³, which may be identical or different, each represent hydrogen or a monovalent hydrocarbon group selected from among alkyls, whether straight-chain or branched, having from 1 to 4 carbon atoms and alkoxyalkyls, whether straight-chain or branched, having from 2 to 8 carbon atoms;
- the symbols Z, which may be identical or different, are divalent bond groups comprising from 1 to 18 carbon atoms;
- x is an integer or fractional number equal to or greater than 2.

2. A composition according to Claim 1, the following characteristics being satisfied:
- the symbols R¹ and R² are selected from among methyl, ethyl, n-propyl and isopropyl;
- the symbol R³ is selected from among hydrogen, methyl, ethyl, n-propyl and isopropyl;
- the symbols Z are selected from among C₁-C₈ alkylenes.

3. A composition according to Claim 2, the following characteristics being satisfied:
- the symbols R¹ and R² are selected from among methyl and ethyl;
- the symbol R³ is selected from among hydrogen, methyl and ethyl;
- the symbols Z are selected from among C₁-C₄ alkylenes.

4. A composition according to Claim 3, Z being propylene.

5. A composition according to any one of Claims 1 to 4, the silane polysulphide being selected from among bis-monohydroxydimethylsilylpropyl polysulphides and mixtures of these polysulphides.

6. A composition according to any one of Claims 1 to 4, the silane polysulphide being selected from among bis-monoalkoxydimethylsilylpropyl polysulphides and mixtures of these polysulphides.

7. A composition according to any one of Claims 1 to 6, the polysulphide being selected from among disulphides (x=2), trisulphides (x=3), tetrasulphides (x=4), pentasulphides (x=5), hexasulphides (x=6) and mixtures of these polysulphides.

8. A composition according to any one of Claims 1 to 7, the diene elastomer being selected from the group consisting of polybutadienes, synthetic polyisoprenes, natural rubber, butadiene copolymers, isoprene copolymers and mixtures of these elastomers.

9. A composition according to any one of Claims 1 to 8, the reinforcing inorganic filler being a siliceous or aluminous filler.

10. A composition according to any one of Claims 1 to 9, the amount of inorganic filler being between 20 and 200 phr.

11. A composition according to Claim 10, the amount of inorganic filler being between 30 phr and 150 phr.

12. A composition according to Claim 11, the amount of inorganic filler being greater than 50 phr.

13. A composition according to Claim 12, the amount of inorganic filler being between 60 phr and 140 phr.

14. A composition according to Claim 13, the amount of inorganic filler being between 70 phr and 130 phr.

15. A composition according to any one of Claims 1 to 13, the amount of coupling agent being between 2 and 15 phr.

16. A composition according to Claim 14, the amount of coupling agent being between 2 and 12 phr.

17. A composition according to any one of Claims 1 to 16, the amount of carbon black being less than 4 phr.

18. A composition according to Claim 16, the amount of carbon black being less than 3 phr.

19. A composition according to Claim 18, the amount of carbon black being between 0.05 and 3 phr, preferably between 0.1 and 2 phr.

20. A composition according to any one of Claims 1 to 19, **characterised in that** the amount of zinc therein is less than 0.3 phr.

21. A composition according to Claim 20, **characterised in that** the amount of zinc therein is zero.

22. A process for preparing a rubber composition based on a diene elastomer and a reinforcing inorganic filler, devoid of or containing less than 0.5 phr of zinc and having improved processability in the uncured state, this process being **characterised in that** there are incorporated by kneading in at least one diene elastomer at least one inorganic filler as reinforcing filler, 0 to less than 5 phr of carbon black and a silane polysulphide of formula (I): 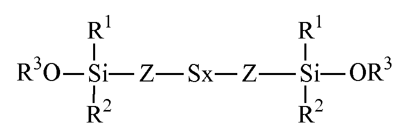 in which:
- the symbols R¹ and R², which may be identical or different, each represent a monovalent hydrocarbon group selected from among alkyls, whether straight-chain or branched, having from 1 to 6 carbon atoms and the phenyl radical;
- the symbols R³, which may be identical or different, each represent hydrogen or a monovalent hydrocarbon group selected from among alkyls, whether straight-chain or branched, having from 1 to 4 carbon atoms and alkoxyalkyls, whether straight-chain or branched, having from 2 to 8 carbon atoms;
- the symbols Z, which may be identical or different, are divalent bond groups comprising from 1 to 18 carbon atoms;
- x is an integer or fractional number equal to or greater than 2.

23. A process according to Claim 22, comprising the following steps:
- incorporating in the diene elastomer, in a mixer:
• the reinforcing inorganic filler;
• the silane polysulphide of formula (I) as coupling agent;
• 0 to less than 5 phr of the carbon black;
by thermomechanically kneading the entire mixture, in one or more stages, until a maximum temperature of between 130°C and 200°C is reached;
- cooling the entire mixture to a temperature of less than 100°C;
- then incorporating:
• a vulcanisation system devoid of zinc or such that the amount of zinc in the final composition is less than 0.5 phr;
- kneading the entire mixture until a maximum temperature of less than 120°C is reached;
- extruding or calendering the rubber composition thus obtained.

24. A process according to Claims 22 or 23, the following characteristics being satisfied:
- the symbols R¹ and R² are selected from among methyl, ethyl, n-propyl and isopropyl;
- the symbol R³ is selected from among hydrogen, methyl, ethyl, n-propyl and isopropyl;
- the symbols Z are selected from among C₁-C₈ alkylenes.

25. A process according to Claim 24, the following characteristics being satisfied:
- the symbols R¹ and R² are selected from among methyl and ethyl;
- the symbol R³ is selected from among hydrogen, methyl and ethyl;
- the symbols Z are selected from among C₁-C₄ alkylenes.

26. A process according to Claim 25, Z being propylene.

27. A process according to any one of Claims 22 to 26, the silane polysulphide being selected from among bis-monoalkoxydimethylsilylpropyl polysulphides and mixtures of these polysulphides.

28. A process according to any one of Claims 22 to 26, the silane polysulphide being selected from among bis-monoalkoxydimethylsilylpropyl polysulphides and mixtures of these polysulphides.

29. A process according to any one of Claims 22 to 28, the polysulphide being selected from among disulphides (x=2), trisulphides (x=3), tetrasulphides (x=4), pentasulphides (x=5), hexasulphides (x=6) and mixtures of these polysulphides.

30. A process according to any one of Claims 22 to 29, the diene elastomer being selected from the group consisting of polybutadienes, synthetic polyisoprenes, natural rubber, butadiene copolymers, isoprene copolymers and mixtures of these elastomers.

31. A process according to any one of Claims 22 to 30, the reinforcing inorganic filler being a siliceous or aluminous filler.

32. A process according to any one of Claims 22 to 31, the amount of inorganic filler being between 20 and 200 phr.

33. A process according to any one of Claims 22 to 32, the quantity of coupling agent being between 2 and 15 phr.

34. A process according to any one of Claims 22 to 33, the amount of carbon black being less than 4 phr.

35. A process according to Claim 34, the amount of carbon black being less than 3 phr.

36. A process according to Claim 35, the amount of carbon black being between 0.05 and 3 phr.

37. A process according to Claim 36, the amount of carbon black being between 0.1 and 2 phr.

38. A process according to any one of Claims 22 to 37, **characterised in that** the amount of zinc in the composition is less than 0.3 phr.

39. A process according to Claim 38, **characterised in that** the amount of zinc in the composition is equal to zero.

40. A ground contact system for a motor vehicle, comprising a rubber composition according to any one of Claims 1 to 21.

41. A tyre comprising a rubber composition according to any one of Claims 1 to 21.

42. A tyre tread comprising a rubber composition according to any one of Claims 1 to 21.

## Patentansprüche

1. Zinkfreie oder weniger als 0,5 phr Zink enthaltende Kautschukzusammensetzung, umfassend (phr = Gewichtsteile pro hundert Teile Elastomer):
- ein Dienelastomer;
- einen verstärkenden anorganischen Füllstoff;
- gegebenenfalls Ruß in einer Menge von weniger als 5 phr;
- ein Silanpolysulfid der Formel (I): 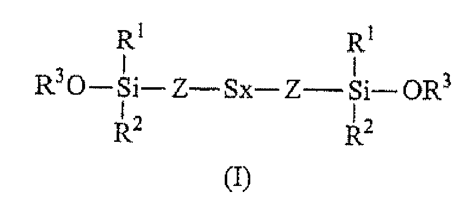
worin:
- die Symbole R¹ und R² gleich oder verschieden sind und jeweils für eine einwertige Kohlenwasserstoffgruppe, die unter linearen oder verzweigten Alkylresten mit 1 bis 6 Kohlenstoffatomen und dem Phenylrest ausgewählt ist, stehen;
- die Symbole R³ gleich oder verschieden sind und jeweils für Wasserstoff oder eine einwertige Kohlenwasserstoffgruppe, die unter linearen oder verzweigten Alkylresten mit 1 bis 4 Kohlenstoffatomen und linearen oder verzweigten Alkoxyalkylresten mit 2 bis 8 Kohlenstoffatomen ausgewählt ist, stehen;
- die Symbole Z gleich oder verschieden sind und jeweils für zweiwertige Verbindungsgruppen mit 1 bis 18 Kohlenstoffatomen stehen;
- x für eine ganze oder gebrochene Zahl größer gleich 2 steht.

2. Zusammensetzung nach Anspruch 1, wobei die folgenden Merkmale erfüllt sind:
- die Symbole R¹ und R² sind unter Methyl, Ethyl, n-Propyl und Isopropyl ausgewählt;
- das Symbol R³ ist unter Wasserstoff, Methyl, Ethyl, n-Propyl und Isopropyl ausgewählt;
- die Symbole Z sind unter C₁-C₈-Alkylenresten ausgewählt.

3. Zusammensetzung nach Anspruch 2, wobei die folgenden Merkmale erfüllt sind:
- die Symbole R¹ und R² sind unter Methyl und Ethyl ausgewählt;
- das Symbol R³ ist unter Wasserstoff, Methyl und Ethyl ausgewählt;
- die Symbole Z sind unter C₁-C₄-Alkylenresten ausgewählt.

4. Zusammensetzung nach Anspruch 3, wobei Z für Propylen steht.

5. Zusammensetzung nach einem der Ansprüche 1 bis 4, wobei das Silanpolysulfid unter Bis-monohydroxydimethylsilylpropylpolysulfiden und Mischungen dieser Polysulfide ausgewählt ist.

6. Zusammensetzung nach einem der Ansprüche 1 bis 4, wobei das Silanpolysulfid unter Bis-monoalkoxydimethylsilylpropylpolysulfiden und Mischungen dieser Polysulfide ausgewählt ist.

7. Zusammensetzung nach einem der Ansprüche 1 bis 6, wobei das Polysulfid unter Disulfiden (x=2), Trisulfiden (x=3), Tetrasulfiden (x=4), Pentasulfiden (x=5), Hexasulfiden (x=6) und Mischungen dieser Polysulfide ausgewählt ist.

8. Zusammensetzung nach einem der Ansprüche 1 bis 7, wobei das Dienelastomer aus der Gruppe bestehend aus Polybutadienen, synthetischen Polyisoprenen, Naturkautschuk, Butadiencopolymeren, Isoprencopolymeren und Mischungen dieser Elastomere ausgewählt ist.

9. Zusammensetzung nach einem der Ansprüche 1 bis 8, wobei es sich bei dem verstärkenden anorganischen Füllstoff um einen siliciumdioxid- oder aluminiumoxidhaltigen Füllstoff handelt.

10. Zusammensetzung nach einem der Ansprüche 1 bis 9, wobei der Gehalt an anorganischem Füllstoff zwischen 20 und 200 phr liegt.

11. Zusammensetzung nach Anspruch 10, wobei der Gehalt an anorganischem Füllstoff zwischen 30 und 150 phr liegt.

12. Zusammensetzung nach Anspruch 11, wobei der Gehalt an anorganischem Füllstoff über 50 phr liegt.

13. Zusammensetzung nach Anspruch 12, wobei der Gehalt an anorganischem Füllstoff zwischen 60 und 140 phr liegt.

14. Zusammensetzung nach Anspruch 13, wobei der Gehalt an anorganischem Füllstoff zwischen 70 und 130 phr liegt.

15. Zusammensetzung nach einem der Ansprüche 1 bis 13, wobei der Gehalt an Kupplungsmittel zwischen 2 und 15 phr liegt.

16. Zusammensetzung nach Anspruch 14, wobei der Gehalt an Kupplungsmittel zwischen 2 und 12 phr liegt.

17. Zusammensetzung nach einem der Ansprüche 1 bis 16, wobei der Gehalt an Ruß unter 4 phr liegt.

18. Zusammensetzung nach Anspruch 16, wobei der Gehalt an Ruß unter 3 phr liegt.

19. Zusammensetzung nach Anspruch 18, wobei der Gehalt an Ruß zwischen 0,05 und 3 phr und vorzugsweise zwischen 0,1 und 2 phr liegt.

20. Zusammensetzung nach einem der Ansprüche 1 bis 19, **dadurch gekennzeichnet, daß** ihr Zinkgehalt unter 0,3 phr liegt.

21. Zusammensetzung nach Anspruch 20, **dadurch gekennzeichnet, daß** ihr Zinkgehalt gleich null ist.

22. Verfahren zur Herstellung einer Kautschukzusammensetzung auf Basis eines Dienelastomers und eines verstärkenden anorganischen Füllstoffs, die zinkfrei ist oder weniger als 0,5 phr Zink enthält und eine verbesserte Verarbeitbarkeit in rohem Zustand aufweist, **dadurch gekennzeichnet, daß** man durch Kneten mindestens einen anorganischen Füllstoff als verstärkenden Füllstoff, 0 bis weniger als 5 phr Ruß und ein Silanpolysulfid der Formel (I): 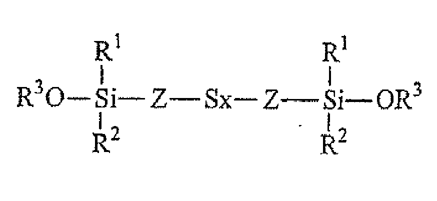 worin:
- die Symbole R¹ und R² gleich oder verschieden sind und jeweils für eine einwertige Kohlenwasserstoffgruppe, die unter linearen oder verzweigten Alkylresten mit 1 bis 6 Kohlenstoffatomen und dem Phenylrest ausgewählt ist, stehen;
- die Symbole R³ gleich oder verschieden sind und jeweils für Wasserstoff oder eine einwertige Kohlenwasserstoffgruppe, die unter linearen oder verzweigten Alkylresten mit 1 bis 4 Kohlenstoffatomen und linearen oder verzweigten Alkoxyalkylresten mit 2 bis 8 Kohlenstoffatomen ausgewählt ist, stehen;
- die Symbole Z gleich oder verschieden sind und jeweils für zweiwertige Verbindungsgruppen mit 1 bis 18 Kohlenstoffatomen stehen;
- x für eine ganze oder gebrochene Zahl größer gleich 2 steht;
in mindestens ein Dienelastomer einarbeitet.

23. Verfahren nach Anspruch 22, bei dem man:
- in einem Mischer:
• den verstärkenden anorganischen Füllstoff;
• das Silanpolysulfid der Formel (I) als Kupplungsmittel;
• 0 bis weniger als 5 phr Ruß in das Dienelastomer einarbeitet, indem man das Ganze ein- oder mehrmals thermomechanisch knetet, bis eine Höchsttemperatur zwischen 130°C und 200°C erreicht ist;
- das Ganze auf eine Temperatur von weniger als 100°C abkühlt;
- dann:
• ein Vulkanisationssystem, das zinkfrei ist oder so beschaffen ist, daß der Zinkgehalt in der fertigen Zusammensetzung unter 0,5 phr liegt,
einarbeitet;
- das Ganze bis zu einer Höchsttemperatur von weniger als 120°C knetet;
- die so erhaltene Kautschukzusammensetzung extrudiert oder kalandriert.

24. Verfahren nach Anspruch 22 oder 23, wobei die folgenden Merkmale erfüllt sind:
- die Symbole R¹ und R² sind unter Methyl, Ethyl, n-Propyl und Isopropyl ausgewählt;
- das Symbol R³ ist unter Wasserstoff, Methyl, Ethyl, n-Propyl und Isopropyl ausgewählt;
- die Symbole Z sind unter C₁-C₈-Alkylenresten ausgewählt.

25. Verfahren nach Anspruch 24, wobei die folgenden Merkmale erfüllt sind:
- die Symbole R¹ und R² sind unter Methyl und Ethyl ausgewählt;
- das Symbol R³ ist unter Wasserstoff, Methyl und Ethyl ausgewählt;
- die Symbole Z sind unter C₁-C₄-Alkylenresten ausgewählt.

26. Verfahren nach Anspruch 25, wobei Z für Propylen steht.

27. Verfahren nach einem der Ansprüche 22 bis 26, wobei das Silanpolysulfid unter Bis-monohydroxydimethylsilylpropylpolysulfiden und Mischungen dieser Polysulfide ausgewählt wird.

28. Verfahren nach einem der Ansprüche 22 bis 26, wobei das Silanpolysulfid unter Bis-monoalkoxydimethylsilylpropylpolysulfiden und Mischungen dieser Polysulfide ausgewählt wird.

29. Verfahren nach einem der Ansprüche 22 bis 28, wobei das Polysulfid unter Disulfiden (x=2), Trisulfiden (x=3), Tetrasulfiden (x=4), Pentasulfiden (x=5), Hexasulfiden (x=6) und Mischungen dieser Polysulfide ausgewählt wird.

30. Verfahren nach einem der Ansprüche 22 bis 29, wobei das Dienelastomer aus der Gruppe bestehend aus Polybutadienen, synthetischen Polyisoprenen, Naturkautschuk, Butadiencopolymeren, Isoprencopolymeren und Mischungen dieser Elastomere ausgewählt wird.

31. Verfahren nach einem der Ansprüche 22 bis 30, wobei es sich bei dem verstärkenden anorganischen Füllstoff um einen siliciumdioxid- oder aluminiumoxidhaltigen Füllstoff handelt.

32. Verfahren nach einem der Ansprüche 22 bis 31, wobei der Gehalt an anorganischem Füllstoff zwischen 20 und 200 phr liegt.

33. Verfahren nach einem der Ansprüche 22 bis 32, wobei der Gehalt an Kupplungsmittel zwischen 2 und 15 phr liegt.

34. Verfahren nach einem der Ansprüche 22 bis 33, wobei der Gehalt an Ruß unter 4 phr liegt.

35. Verfahren nach Anspruch 34, wobei der Gehalt an Ruß unter 3 phr liegt.

36. Verfahren nach Anspruch 35, wobei der Gehalt an Ruß zwischen 0,05 und 3 phr liegt.

37. Verfahren nach Anspruch 36, wobei der Gehalt an Ruß zwischen 0,1 und 2 phr liegt.

38. Verfahren nach einem der Ansprüche 22 bis 37, **dadurch gekennzeichnet, daß** der Zinkgehalt der Zusammensetzung unter 0,3 phr liegt.

39. Verfahren nach Anspruch 38, **dadurch gekennzeichnet, daß** der Zinkgehalt der Zusammensetzung gleich null ist.

40. Bodenverbindungssystem für Kraftfahrzeug, umfassend eine Kautschukzusammensetzung nach einem der Ansprüche 1 bis 21.

41. Reifen, umfassend eine Kautschukzusammensetzung nach einem der Ansprüche 1 bis 21.

42. Reifenlauffläche, umfassend eine Kautschukzusammensetzung nach einem der Ansprüche 1 bis 21.
